# EUROPÄISCHE PATENTANMELDUNG

(11) **EP 0 742 131 A1**
(43) Veröffentlichungstag der Anmeldung: **13.11.1996**
(21) Anmeldenummer: 96107551.2
(22) Anmeldetag: 11.05.1996
(51) Int. Cl.: B61D 39/00, B60J 10/10

(54) **Vorrichtung zur Abdichtung einer Planenabdeckung eines Transportfahrzeuges**

(30) Priorität: 11.05.1995 DE 19517191
(71) Anmelder: GRAAFF Gesellschaft mit beschränkter Haftung, D-31008 Elze (DE)
(72) Erfinder: Graaff, Wolfgang, 31008 Elze (DE)
(74) Vertreter: Gosch, Wolf-Dietrich

(57) **Zusammenfassung**

Vorrichtung zur Abdichtung einer Planenabdeckung für Transportfahrzeuge, insbesondere Eisenbahnwagen und Lastkraftwagen, wobei die Plane an einer oder beiden Stirnseiten des Fahrzeuges abdichtend befestigt, an stützenden Spriegeln gehaltert ist und die Seitenkanten einer Ladefläche des Fahrzeuges in Richtung der auf sie wirkenden Schwerkraft überragt, wobei entlang der Seitenkante (1) jeweils eine durchgehende Klemmleiste (4) vorgesehen ist, die die Plane (5) in Querrichtung zur Ladefläche (2) klemmend beaufschlagt. Die Klemmleisten (4) weisen im wesentlichen die gleiche Länge auf wie die ihr benachbarten Seitenkanten (1) der Ladefläche (2). Parallel zu den Klemmleisten (4) am Aufbau (7) des Fahrzeuges (3) verlaufen Unterlagen (8), zwischen denen und den Klemmleisten (4) die Plane (5) eingeklemmt bzw. formschlüssig gehalten ist.

## Beschreibung

Die Erfindung betrifft eine Vorrichtung zur Abdichtung einer Planenabdeckung eines Transportfahrzeuges, wie zum Beispiel eines Eisenbahnwagens oder eines Lastkraftwagens, wobei die Plane an einer oder beiden Stirnseiten des Fahrzeuges abdichtend befestigt, an sie stützenden Spriegeln gehaltert ist und die Seitenkanten einer Ladefläche des Fahrzeuges in Richtung der auf sie wirkenden Schwerkraft überragt.

Üblicherweise werden derartige Planenabdeckungen an den Stirnseiten des Fahrzeuges mit einer Vorrichtung, die eine Hebelmechanik oder ein Kurbeltrieb sein kann, in ein Labyrinth oder in elastische Unterlagen gepreßt, um dort eine Dichtigkeit gegen Witterungseinflüsse zu gewährleisten.

An den Seiten der Fahrzeuge werden die Planenabdeckungen mit Schnüren befestigt, die durch Ösen an der Plane und der Seite der Ladenfläche gezogen werden oder die Planen werden sehr weit an der Ladefläche vorbei heruntergezogen bzw. gespannt. Damit soll eine ausreichende Abdichtung gegen Regen und Wasser erzielt werden. Das größte Problem bei der Abdichtung eines Planenverdeckes eines Fahrzeuges stellt jedoch der Flugschnee dar, weil dieser wegen der durch den Fahrtwind erzeugten Verwirbelungen wesentlich höhere Anforderungen an die Dichtigkeit stellt. Diese Abdichtung gelingt jedoch nach dem Stand der Technik höchst unzureichend.

Aufgabe der vorliegenden Erfindung ist es daher, eine Vorrichtung der eingangs genannten Art zu schaffen, mit der eine zuverlässige Abdichtung einer Planenabdeckung an dem Transportfahrzeug gewährleistet werden kann und gleichzeitig der manuelle Aufwand beim Öffnen und Schließen sehr gering ist.

Diese Aufgabe wird erfindungsgemäß dadurch gelöst, daß entlang der Seitenkanten der Ladefläche jeweils eine durchgehende Klemmleiste vorgesehen ist, die die Plane in Querrichtungen zur Ladefläche klemmend beaufschlagt.

Damit wird sichergestellt, daß die Plane gegen die Seitenkante der Ladefläche nicht verrutschen kann und auch keine Einströmöffnungen für Zugluft freiläßt, wodurch auch Regen, Wasser oder Flugschnee in das Innere unterhalb der Planenabdeckung gelangen könnte. Gemäß einer bevorzugten Ausführungsform der Erfindung weist die Klemmleiste mindestens die Länge der ihr benachbart verlaufenden Seitenkante der Ladefläche auf so daß die Plane in voller Länge der Seitenkante der Ladenfläche abdichtend gegen diese gepreßt wird.

Weitere Einzelheiten der Erfindung ergeben sich aus der nachfolgenden ausführlichen Beschreibung und den beigefügten Zeichnungen, in denen eine bevorzugte Ausführungsform der Erfindung beispielsweise veranschaulicht ist.

In den Zeichnungen zeigen:

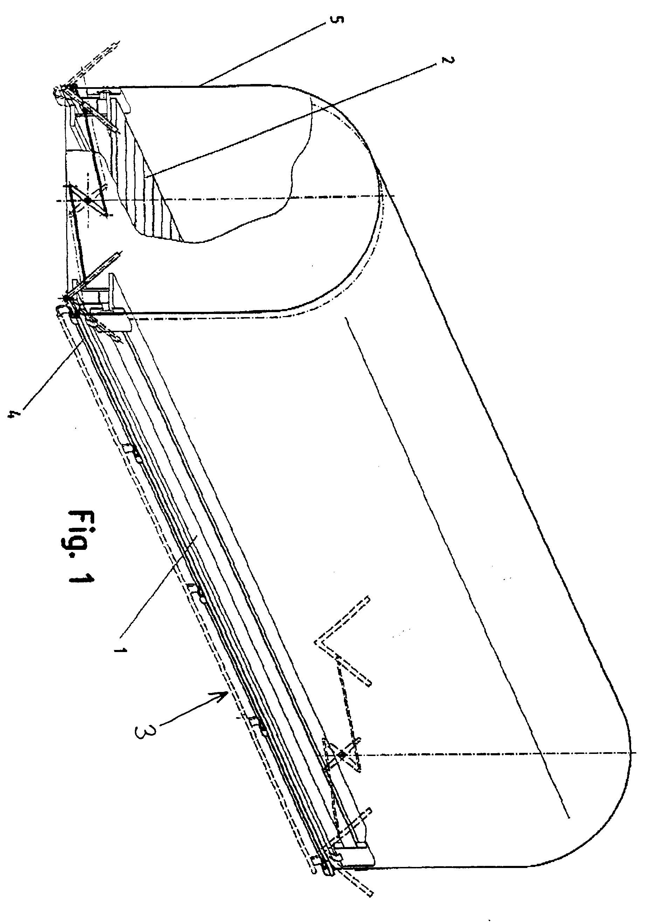

- Fig. 1:: Eine schematische perspektivische Darstellung eines Aufbaues eines Eisenbahnwagens mit Planenabdeckung,

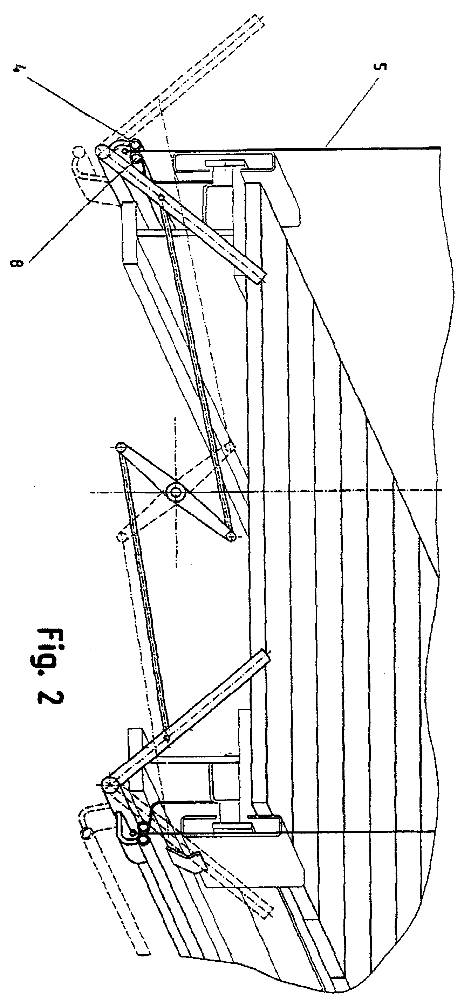

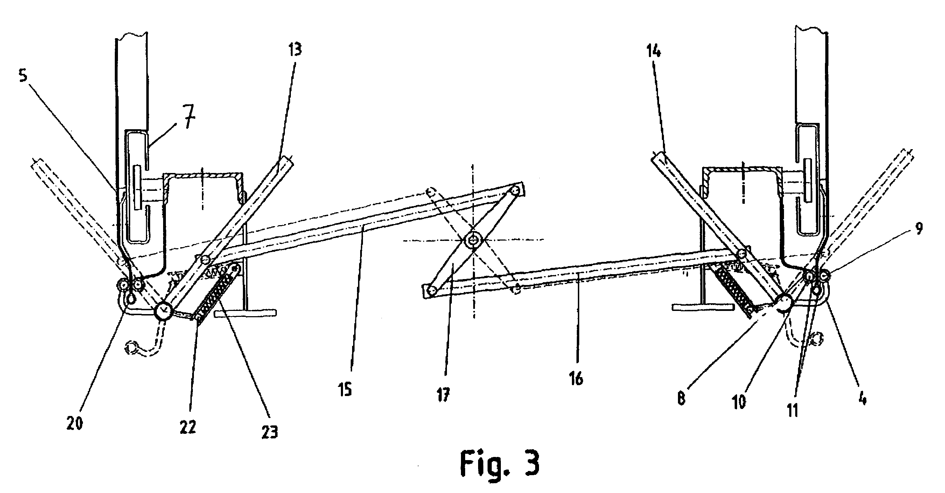

- Fig. 2 und 3:: je eine Vorderansicht einer Vorrichtung und

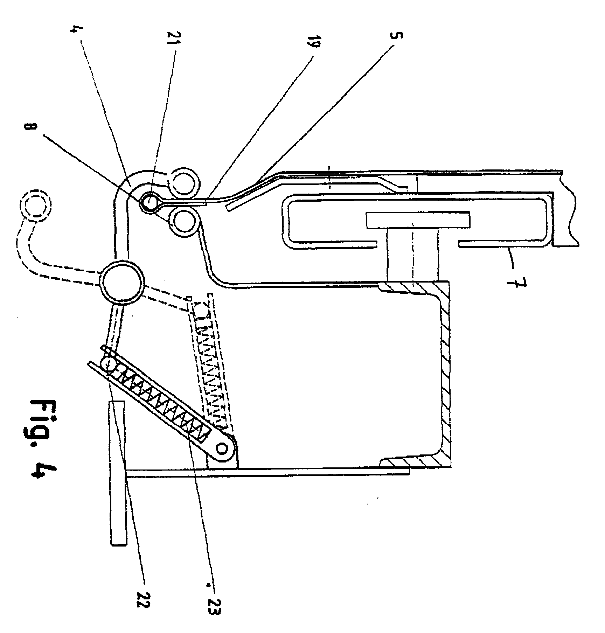

- Fig. 4:: einen Teilschnitt durch eine Vorrichtung.

Eine erfindungsgemäße Vorrichtung besteht im wesentlichen aus jeweils zwei entlang der Seitenkanten 1 einer Ladefläche 2 des Fahrzeugzeugs 3 verlaufenden durchgehenden Klemmleisten 4, die eine Plane 5 einer Planenabdeckung 6 und zwei am Aufbau des Fahrzeuges 3 im Bereich der Seitenkanten 1 befindlichen Unterlagen 8, zwischen denen und den Klemmleisten 4 die Plane 5 eingeklemmt ist.

Jede Klemmleiste 4 weist im wesentlichen die gleiche Länge auf wie die Seitenkante 1 der Ladenfläche 2. Die Klemmleisten 4 sind in der Weise verschwenkbar am Fahrzeug gelagert, daß sie von einer die Plane 5 einklemmenden Einklemmstellung in eine die Plane 5 freigebende Stellung verschwenkbar sind.

Die Klemmleiste 4 besteht im wesentlichen aus einem Rohr 9, das als Rundrohr oder auch in anderer geometrischer Form, beispielsweise ein entsprechend angepaßtes Profil, ausgebildet sein kann. Auch die Unterlage 8 kann aus einem Rohr 10 bestehen, es ist jedoch auch möglich, diese beispielsweise in Form eines U-Profiles auszubilden, in das die Klemmleiste 4 hineinragt. Die Unterlage 8 kann aus einem festen oder einem elastischen Material bestehen. Sie kann aus einem Klettverschlußband bestehen, das mit einer an der Plane entsprechenden Klettverschlußband verschließbar ist. Sie kann ferner aus einer Magnetleiste bestehen.

Die Klemmleisten 4 sind vorzugsweise jeweils mit einer elastischen Schicht 11 versehen, die vorzugsweise aus Gummi besteht.

Jede Klemmleiste 4 ist mit einem Betätigungshebel 13, 14 versehen, mit dessen Hilfe die Verschwenkung der Klemmleisten 4 herbeigeführt werden kann. Die Betätigungshebel 13, 14 sind jeweils durch Zug-/Schubstangen 15, 16 über einen Kipphebel 17 miteinander verbunden, über den eine Betätigungsbewegung des einen Betätigungshebels 13, 14 auf den an der anderen Seitenkante 1 befindlichen Betätigungshebel 14, 13 übertragen wird, so daß entlang beider Seitenkanten 1 angeordnete beide Klemmleisten 4 mit einer einzigen Betätigungsbewegung verschwenkt werden können. Die Schließstellung der Klemmleiste 4 ist durch einen Kniehebel 22 gesichert.

Jede Klemmleiste 4 ist mit mindestens einem Federelement 23 versehen, dessen Federwirkung eine Totpunktüberwindung im Sinne einer Einklemmstellung der Klemmleiste 4 einerseits und eine die Plane 5 freigebende Stellung andererseite bewirkt. Dabei hält das Federelement 23 den Kniehebel 22 in der Übertotpunktlage. Vorzugsweise ist eine Mehrzahl von Federelementen 23 über die gesamte Länge jeder Klemmleiste 4 verteilt, um einen gleichmäßigen Andruck der Klemmleiste 4 an die Unterlage 8 zu gewährleisten. Die Plane 5 ist entlang ihres der Klemmleiste 4 parallel verlaufenden Saumes 19 mit einer Verdickung 20 versehen, die sich über die gesamte Länge des Saumes 19 erstreckt. Diese Verdickung besteht vorzugsweise aus einem im Bereich des Saumes 19 der Plane 5 eingenähtem Seil 21. Mit Hilfe der Verdickung 20 kann eine formschlüssige Verbindung zwischen der Plane 5 einerseits und der Klemmleiste 4 und der Unterlage 8 andererseits in der Einklemmstellung der Plane 5 herbeigeführt werden. Die Verdickung 20 ist vorzugsweise aus einem ausformbaren flexiblen Material, um die formschlüssige Haltung der Plane 5 sicherzustellen, auch dann, wenn beispielsweise bei Gegenverkehr ein heftiger Luftdruckstoß auf die Plane 5 einwirkt. Es ist auch möglich, die Verdickung 20 aus einer Bleischnur auszubilden, die durch die auf sie einwirkende Schwerkraft ein Verschließen der Plane 5 erheblich erleichtert.

Da auf jeder Seite der Ladefläche 2 Betätigungshebel 13, 14 zum Verschwenken der Klemmleisten 4 angeordnet sind, kann nach Beladen des Fahrzeuges und Befestigung der Plane 5 an den Stirnseiten 22 des Fahrzeuges 3 die Plane 5 entlang der Seitenkanten 1 der Ladefläche 2 durch gleichzeitiges Einklemmen zwischen die Klemmleisten 4 und die Unterlagen 8 mit der Betätigung eines einzigen Betätigungshebels 13, 14 abdichtend eingeklemmt werden. Dies ist besonders vorteilhaft, da bei einem in einem Zug befindlichen Eisenbahnwaggon es nicht notwendig ist, auf die andere Seite des Geleises zu gelangen, um dort die Klemmleiste 4 zu verschwenken.

## Patentansprüche

1. Vorrichtung zur Abdichtung einer Planenabdeckung für Transportfahrzeuge, insbesondere Eisenbahnwagen und Lastkraftwagen, wobei die Plane an einer oder beiden Stirnseiten des Fahrzeuges abdichtend befestigt, an stützenden Spriegeln gehaltert ist und die Seitenkanten einer Ladefläche des Fahrzeuges in Richtung der auf sie wirkenden Schwerkraft überragt, dadurch gekennzeichnet, daß entlang der Seitenkanten (1) jeweils eine durchgehende Klemmleiste (4) vorgesehen ist, die die Plane (5) in Querrichtungen zur Ladefläche (2) klemmend beaufschlagt.

2. Vorrichtung nach Anspruch 1, dadurch gekennzeichnet, daß die Klemmleisten (4) im wesentlichen die gleiche Länge aufweisen wie die ihr benachbarte Seitenkanten (1) der Ladefläche (2).

3. Vorrichtung nach Anspruch 1 und 2, dadurch gekennzeichnet, daß parallel zu den Klemmleisten (4) am Aufbau (7) des Fahrzeuges (3) Unterlagen (8) verlaufen, zwischen denen und den Klemmleisten (4) die Plane (5) eingeklemmt bzw. formschlüssig gehalten ist.

4. Vorrichtung nach Anspruch 3, dadurch gekennzeichnet, daß die Unterlage (8) elastisch ausgebildet ist.

5. Vorrichtung nach Anspruch 3, dadurch gekennzeichnet, daß die Unterlage (8) fest ausgebildet ist.

6. Vorrichtung nach Anspruch 3, dadurch gekennzeichnet, daß die Unterlage (8) aus einem Klettverschlußband besteht, das mit einem an der Plane (5) in ihrem der Seitenkante (1) der Ladefläche zugekehrten Bereich verlaufenden Klettverschlußband angepaßt ist.

7. Vorrichtung nach Anspruch 1 bis 3, dadurch gekennzeichnet, daß die Unterlage (8) aus einer Magnetleiste besteht.

8. Vorrichtung nach Anspruch 1 bis 7, dadurch gekennzeichnet, daß die Klemmleisten (4) von einer Einklemmstellung in eine die Plane (5) freigebende Stellung verschwenkbar am Fahrzeug (3) gelagert sind.

9. Vorrichtung nach Anspruch 1 bis 8, dadurch gekennzeichnet, daß die Klemmleisten (4) aus Rohren (9) bestehen.

10. Vorrichtung nach Anspruch 1 bis 9, dadurch gekennzeichnet, daß die Klemmleisten (4) jeweils mit einer elastischen Schicht (11) bedeckt sind.

11. Vorrichtung nach Anspruch 1 bis 10, dadurch gekennzeichnet, daß die elastischen Schichten (11) aus Gummi bestehen.

12. Vorrichtung nach Anspruch 1 bis 11, dadurch gekennzeichnet, daß jede Klemmleiste (4) mit einem Betätigungshebel (13, 14) versehen ist.

13. Vorrichtung nach Anspruch 1 bis 12, dadurch gekennzeichnet, daß die Betätigungshebel (13, 14) jeweils durch Zug-/Schubstangen (15, 16) beweglich miteinander verbunden sind, zwischen denen ein eine Betätigungsbewegung übertragender Kipphebel (17) angeordnet ist.

14. Vorrichtung nach Anspruch 1 bis 13, dadurch gekennzeichnet, daß die Schließstellung jeder Klemmleiste (4) durch einen Kniehebel (22) gesichert ist.

15. Vorrichtung nach Anspruch 1 bis 14, dadurch gekennzeichnet, daß der Kniehebel (22) mit einem Federelement (23) in der Übertotpunktlage gehalten ist.

16. Vorrichtung nach Anspruch 1 bis 15, dadurch gekennzeichnet, daß über die gesamte Länge jeder Klemmleiste (4) eine Mehrzahl von Federelementen (18) vorgesehen ist.

17. Vorrichtung nach Anspruch 1 bis 16, dadurch gekennzeichnet, daß die Plane (5) entlang ihrer den Klemmleisten (4) parallelverlaufenden Säume (19) je eine Verdickung (20) aufweist, über die in der Einklemmstellung eine formschlüssige Verbindung zwischen der Plane (5) einerseits und den Klemmleisten (4) und der Unterlage (8) andererseits besteht.

18. Vorrichtung nach Anspruch 1 bis 17, dadurch gekennzeichnet, daß die Verdickung (20) aus einem im Bereich der Säume (19) der Plane (5) eingenähtem Seil (21) besteht.

19. Vorrichtung nach Anspruch 17 und 18, dadurch gekennzeichnet, daß die Verdickung (20) aus einem die Plane (5) in Richtung der auf sie wirkenden Schwerkraft straffenden Bleiband besteht.
